# EUROPEAN PATENT SPECIFICATION

(11) **EP 2 706 408 B1**
(45) Date of publication and mention of the grant of the patent: **06.04.2016**
(21) Application number: 12306080.8
(22) Date of filing: 07.09.2012
(51) Int. Cl.: G03B 21/14, H04N 9/31

(54) **Image stabilization system for handheld devices equipped with pico-projector**
Bildstabilisierungssystem für tragbare, mit Piko-Projektor ausgestattete Vorrichtungen
Système de stabilisation d'image pour des dispositifs portatifs équipés de pico-projecteur

(43) Date of publication of application: 12.03.2014
(73) Proprietor: ST-Ericsson SA, 1228 Plan-les-Ouates (CH)
(72) Inventor: Cuisenier, Laurent, 38300 Bourgoin Jallieu (FR); Roffet, Frederique, 38500 Coublevie (FR)
(74) Representative: Casalonga

(56) References cited:
- US-A1- 2005 024 606
- US-A1- 2006 290 896
- US-A1- 2010 103 386
- US-A1- 2011 111 849

## Description

### FIELD OF THE INVENTION

The invention relates to the field of image stabilization in pico-projectors and more specifically in handheld devices equipped with projectors and additional sensors.

### BACKGROUND OF THE INVENTION

Handheld devices like smartphones are more and more used for the visualization of images or movies. Nevertheless the small size of their screens does not help to watch videos in good conditions. Projection features are being integrated into handheld devices to solve their issue of small screen size. That is why handheld devices like smartphones are more and more equipped with projectors. That way, any wall or surface can be used as a projection surface. This enables a large visual presentation from a very small projector.

Projectors embedded in handheld devices like smartphones are called pico-projectors. The issue of image stabilization does not arise from office projectors as those devices can rest on a stable platform or they can be fixed externally and do not move during a projection session. In the case of pico-projectors, they are sustained by instable object like a hand, so they will suffer vibrations and slight orientation and position changes during the projection, called "hand shake".

The lack of stability in the projection of a sequence of images can produce several defects. Keystone is a bad orientation of the projector relative to the projection surface; inner rotation is a bad orientation of the projector relative to its own central beam; gap is a bad displacement of the projector relative to the projection area on the projection surface, zoom is a changing distance of the projector with the projection surface. Instability corresponds to a projection session where one or several projected images of the sequence will suffer from one or many of those defects.

While the issue of image stabilization due to vibrations in image projection can be solved in office projectors by fixing physically the body of the projector, for pico-projectors, image stabilization due to hand shake requires image processing techniques.

In prior arts, many correction techniques relate to keystone, but not stabilization. Some of the cited defects are not mentioned. Correcting only the image deformation for example is not sufficient to correct stabilization. Image stabilization requires more data than managing keystone or bad spatial orientation alone. For keystone, knowing the elevation and inclinations angles with the projection surface is necessary.

In some prior art where the image stabilization issue is addressed, there is needed a complete set of motion sensors to compensate for handshake. In a first prior art, for example the patent application US20120113514, a combination of gyroscopes and accelerometers on all three axes is used to compute a corrective signal input to feed a video controller to reduce the apparent motion of the image to be projected.

In a second prior art, for example the patent US6753907, an un-calibrated camera is used to observe the projected image; and the image to be displayed is pre-warped so that the distortions induced by the misaligned projection system will be compensated. Generally speaking, techniques with heavy image processing, as they can't be applied in real time during a movie projection, are not image stabilization techniques.

How to manage image stabilization during projection in a real time process and with a low cost approach is still to question in handheld devices. Image stabilization systems are classified into two main categories. The optical or mechanical image stabilizer employs a prism assembly that moves opposite to the shaking of camera for stabilization. The optical image stabilizers are hardware dependent and require built-in devices such as servo motors making it voluminous and costly. The digital or electronic image stabilizer compensates for the image sequence by employing motion sensors to detect the device movement for compensation and performs image compensation through image processing algorithms.

### SUMMARY OF THE INVENTION

An object of embodiments of the present invention is to alleviate at least partly the above mentioned drawbacks. More particularly, embodiments of the invention aim at improving image stabilization in pico-projectors during a projection session.

It is taken advantage of the several devices and sensors handheld devices can be equipped with for image stabilization. An object of the invention is, in a projection session, to detect a movement and to compensate for it easily and at low cost.

The object of the present invention is achieved by a method for the projection of a sequence of images onto a display surface by a handheld device having an embedded projector, the method comprising, for an image of the sequence of images to be projected : a step of evaluation wherein a spatial position variation is evaluated with respect to a reference spatial position of the handheld device; and the spatial position variation is defined by a spatial orientation variation provided by a 3-axes gyroscope sensor and a spatial vector variation; the spatial vector variation being determined by 3 independent coordinates ; and embedded in the handheld device a step of compensation wherein a compensated image is generated from the image to be projected depending on the spatial position variation ; and a step of projecting onto the display surface the compensated image wherein in the step of evaluation, at least one of said 3 independent coordinates is provided by a stereoscopic sensor by taking stereoscopic pictures, and wherein 2 of said 3 independent coordinates are provided by a 2-axes acceleronmeter.

Embodiments can comprise one or more of the following features.
▪ The reference spatial position is constant for all images of the sequence of images to be projected.
▪ The reference spatial position is variable between two images of the sequence of images to be projected
▪ The spatial orientation variation is determined by 3 independent angles.
▪ The 3 independent angles are provided by a 3 axes gyroscope.
▪ 2 of the 3 independent coordinates are provided by a 2-axes accelerometer.
▪ The step of compensation utilizes a graphics processing unit technique to generate the compensated image. This is also achieved with a computer program product comprising a computer readable medium, having thereon a computer program comprising program instructions, the computer program being loadable into a data-processing unit and adapted to cause execution of the method when the computer program is run by the data-processing unit.

The object of the present invention is also achieved with a data storage medium having recorded thereon a computer program comprising instructions for performing the method.

The object of the present invention is also achieved by a handheld device having an embedded projector adapted to project a sequence of images onto a display surface; said handheld device comprising an evaluation unit adapted to evaluate a spatial position variation with respect to a reference spatial position of said handheld device; said spatial position variation being defined by a spatial orientation variation and a spatial vector variation; said spatial vector variation being determined by 3 independent coordinates ; and said handheld device comprising a compensation unit adapted to generate a compensated image from an image of the sequence of images to be projected , depending on said spatial position variation; and said handheld device comprising a 3-axes gyroscope adapted to provide said spatial orientation variation, and said handheld device comprising a 2-axes adapted to provide 2 of said 3 independent coordinates, and said embedded projector being adapted to project onto said display surface said compensated image.
wherein said handheld device comprises a stereoscopic sensor configured to take stereoscopic pictures and to provide at least one of the 3 independent coordinates determining said spatial vector variation.

Embodiments can comprise one or more of the following features.
▪ The stereoscopic sensor uses a two-lens stereo camera.
▪ The stereoscopic sensor uses two single-lens cameras joined together.
▪ The spatial orientation variation is determined by 3 independent angles.
▪ The handheld device is further comprising a 3 axes gyroscope adapted to deliver the spatial orientation variation.
▪ The handheld device is configured to utilize a graphics processing unit technique to generate the compensated image.

Further features and advantages of embodiments of the invention will appear from the following description of some embodiments of the invention, given as nonlimiting examples, with reference to the accompanying drawings listed hereunder.

### BRIEF DESCRIPTION OF THE DRAWINGS

Figure 1 shows a block diagram of a configuration for projecting an image or frame without image stabilization;
Figure 2a to Figure 2f are a range of figure illustrating defects in a projection process.

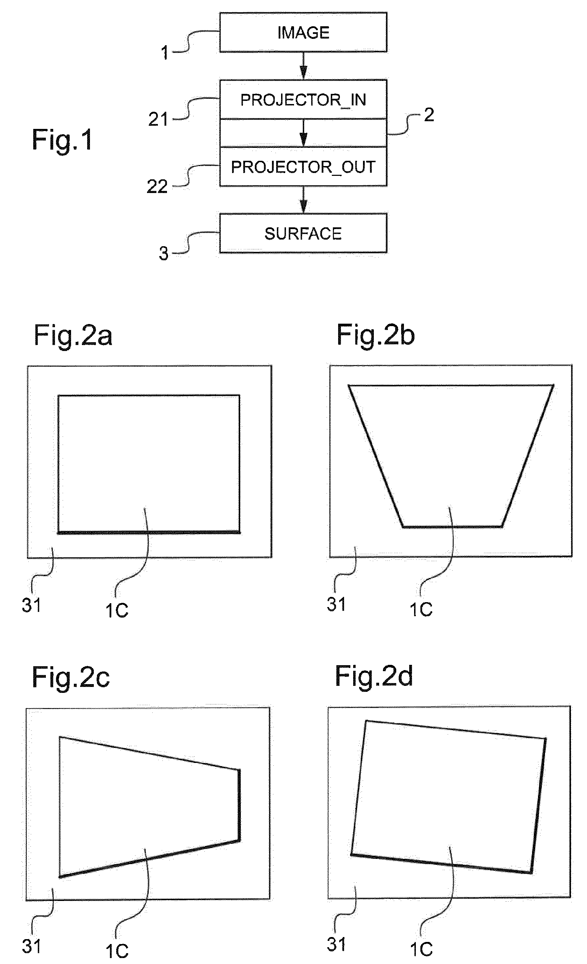

Figure 2a is an image in a frame correctly projected;
Figure 2b is an image in a frame badly projected because of elevation;
Figure 2c is an image in a frame badly projected because of inclination;
Figure 2d is an image in a frame badly projected because of inner rotation;

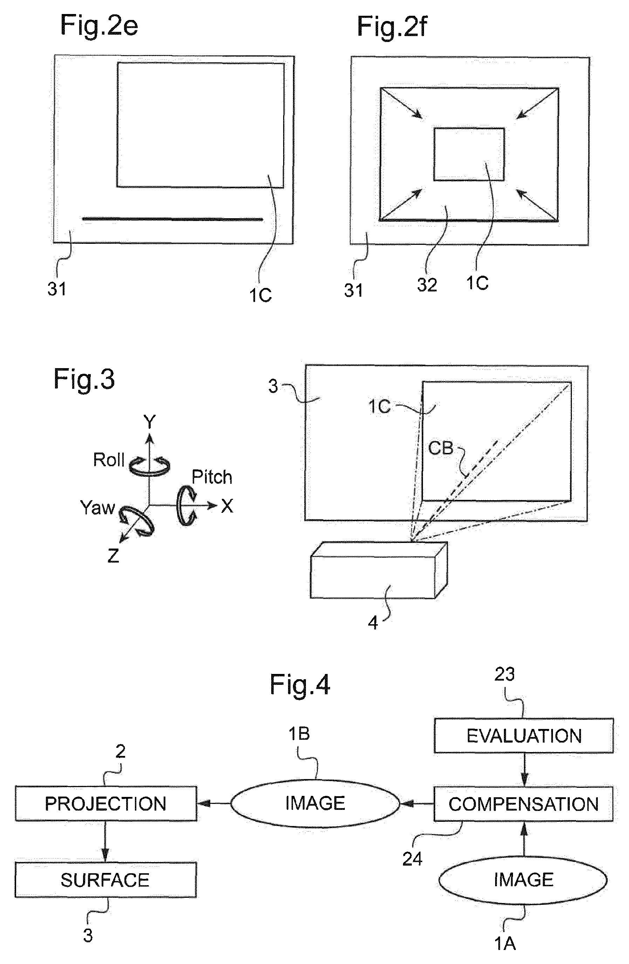

Figure 2e is an image in a frame badly centered because of gap.
Figure 2f is an image of a frame badly displayed because of a zoom issue.
Figure 3 shows a graphics representative of a view of the projector and a projection surface in a Cartesian coordinate system representative of the reference mark in accordance with an embodiment of the invention.
Figure 4 shows a block diagram of a configuration for projecting an image frame with image stabilization in accordance with an embodiment of the invention.

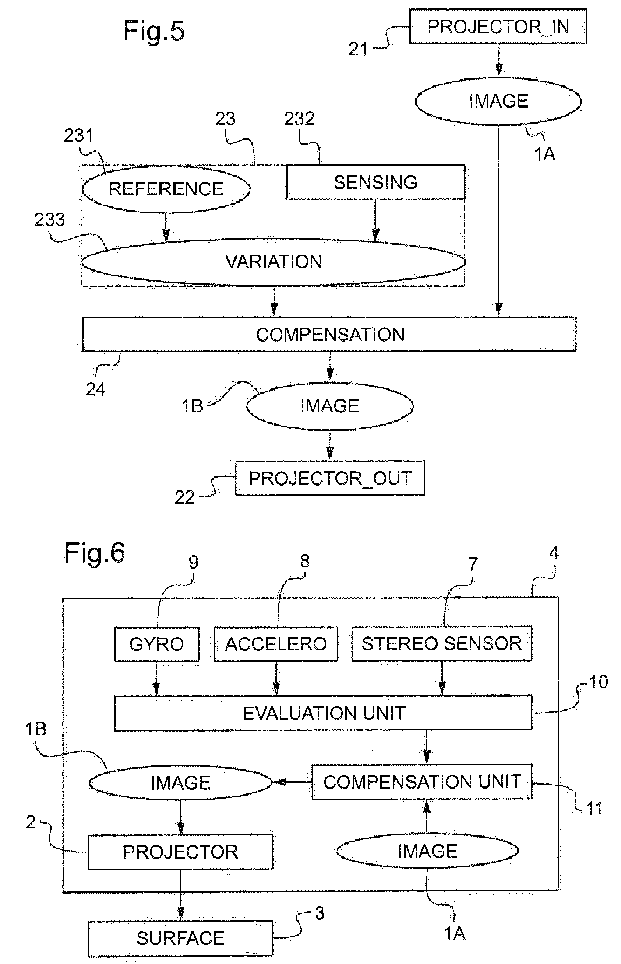

Figure 5 shows a block diagram illustrating an exemplary configuration of an evaluation unit and a compensation unit in accordance with an embodiment of the invention unit.
Figure 6 is a functional block of a handheld device according to an embodiment of the present invention.

### DETAILED DESCRIPTION OF EMBODIMENTS OF THE INVENTION

When there is no image stabilization, the quality of the video can decrease. Figure 1 shows a block diagram of a configuration for projecting an image or frame without image stabilization. Figure 1 comprises an image 1, a projector 2, and a projection surface 3. Of the projector, the projector image input 21 and the projector image output 22 are represented. If there is no transformation of the image 1 within the projector 2, the image 1 navigates unchanged through the projector 2 until the projector image output 22. But when the position of the projector 2 oscillates, one or several of the resulting images at the projection surface 3 can be distorted or badly positioned. The platform where the camera is fixed is not static. The motion of the platform will cause a deviation between two serial frames. The instability of images frames will make the image displayed on the screen misty. Actually in a projection of a sequence of images through a sequence of frames, some of the frames can be having an unwanted displacement with respect to the complete image sequence before stabilization process is applied. Because of sudden scene differences occurred on certain frames, some corruptions occur on the complete movements of the objects in the video. As result, the quality of the video decreases.

Figure 2a is an image of a frame correctly projected. In Figure 2a, the handheld device is correctly oriented according to the projection area 31 of the projection surface and the projected image 1C which is of good quality.

Figure 2b is an image of a frame badly projected because of an arisen elevation of the handheld projector. In Figure 2b, the handheld device position is not correctly oriented according to the projection surface and the projected image 1C has a bad alignment relative to the projection area 31.

Figure 2c is an image of a frame badly projected because of an arisen inclination of the handheld projector. In Figure 2c, the handheld device position is not correctly oriented according to the projection surface and the projected image 1C has a bad alignment relative to the projection area 31.

Figure 2d is an image of a frame badly projected because of an arisen inner rotation. In Figure 2d, the handheld device position is not correctly oriented according to the projection surface and the projected image 1C has a bad orientation relative to the projection area 31. It comes from a bad axial orientation angle of the handheld device according to the projection surface normal axis and an existing inner rotation angle.

Figure 2e is an image of a frame badly centered because of an arisen translation gap. In Figure 2e, the handheld device has translated according to the projection area 31 in the projection surface and the projected image 1C is not centered.

Figure 2f is an image of a frame badly displayed because of a zoom issue. In Figure 2f, the handheld device has moved away from the projection area 31 on the projection surface 3 and the projected image 1C needs resizing according to a reference image 32.

More generally, any bad projection will result from one of the precedent defects, or any combination of two or three defects of sort.

With an image stabilization system, the resulting image at the projection surface is targeting the projection area and is not misty owing to vibration. The goal is to place the projector display in a fixed target area on the projection surface, despite jitter and vibrations during the projection. At each time step the position of the projector is collected and the image to be projected is compensated so as to fulfill the requirement of good projection quality. Several kinds of defects in the projection of images onto the projection surface will need to be compensated. The first defect is the orientation of the pico-projector in respect of the projection surface and the second and third defects are the translation and the remoteness with the target point in the projection surface. The orientation includes elevation, inclination and inner rotation. The translation includes horizontal or vertical gap on the one hand, and depth with the target area on the other hand. Keystone correction needs an estimate of the orientation of the projector relative to the surface. Image stabilization consists in fixing the projection on the surface even under hand jitter. As image stabilization needs both orientation and position of the projector relative to the surface, keystone correction is the easiest case.

Digital image stabilizer can be chosen advantageously. It does not need any mechanical or optical devices and is suitable for handheld devices. Digital stabilization systems use completely electronic processing to control the image stability. It uses more software algorithms and less hardware components to compensate for the disturbances. This makes digital stabilization more portable and cost effective compared with other methods. In digital stabilization, spatial positions variations are obtained by taking consecutive two frames of the sequence and performing a series of operations over the frames. Because of exhaustive image processing operations, spatial position variation evaluation is the most time consuming and difficult part in digital stabilization.

Sensors data and vectors calculations can be used as following. Figure 3 shows a graphic representative of a view of the handheld device 4 and a projection surface 3 in a Cartesian coordinate system representative of the reference mark in accordance with an embodiment of the invention. The projection surface 3 contains a projected image 1C resulting from the projection by the handheld device 4. According to Figure 3, the elevation of the handheld device 4 corresponds to a rotation around the X axis or pitch; the inclination of the handheld device 4 corresponds to a rotation around the Y axis or roll; and the inner rotation of the handheld device 4 corresponds to a rotation around the Z axis or yaw. A bad orientation of the handheld device 4 according to the projection surface 3 will correspond to any combination of rotations of the handheld device 4 around those axes. A bad position of the handheld device according to the projection surface 3 will correspond to any combination of translations of the handheld device around towards axes.

With the stereoscopic system, knowing what happened along the Z axis direction is possible. Thus a 2-axis accelerometer is enough for the remaining translation components. In practice, information from 3-axes gyroscopes, 2-axes accelerometers and stereoscopic sensors can be mixed together to enable the pico projector to know the spatial vector variation. A new position of the handheld device 4 corresponds to a translation and a rotation. The translation can be split into firstly the gap to the target of the central beam CB during the projection, and secondly the distance to the projection surface 3. Pico projectors are not supposed to be tied to target on the projection surface 3; it is one of their advantages and an easy to use feature. The distance to the projection surface 3 is compensable with an automatic zooming feature, capable of magnification when the distance is increasing and capable of reduction when the distance is lowering.

The projector can be enriched with an evaluation unit and a compensation unit as following. After spatial position evaluation, motion compensation part is responsible for correcting unintentional motions. It is about the alignment of the frames with respect to the estimated jitter through an inverse transformation process. In this part, same amount of movements are given to the frames in the inverse direction with the jitter in order to obtain stabilized video sequence.

Figure 4 shows a block diagram of a configuration for projecting an image with image stabilization in accordance with an embodiment of the invention. Figure 4 comprises an input image 1A, a projector 2, and a projection surface 3. Furthermore, an evaluation unit 23 and a compensation unit 24 are integrated. With the evaluation unit 23 and the compensation unit 24, the output transmitted at the projector 2 is a compensated image 1B according to the input image 1A to enable the resulting image at the projection surface 3 to target the projection area and not to be misty owing to vibration.

Figure 5 shows a block diagram illustrating an exemplary configuration of an evaluation unit and a compensation unit in accordance with an embodiment of the invention. Figure 5 comprises the projector image input 21, the compensation unit 24, the projector image output 22, and between the projector image input 21 and the compensation unit 24, the evaluation unit 23. In Figure 5, the compensation unit 24 is fed in parallel by the input image 1A which is transmitted by the projector image input 21 and by the evaluation unit block 23 output. The compensation unit 24 at the end outputs the compensated image 1B to the projector image output 22. The objective is to keep some kind of history of the spatial positions variation in order to create a stabilized sequence without removing the motion of the camera.

An exemplary embodiment of the method according to the present invention for stabilizing image recordings adapted for projected data will consist firstly by calculating what action is required to keep the image stable from information by motion and proximity sensors and secondly by detecting a movement and compensating for it to get stabilization. The correction can be applied in real time, during the projection of a movie. The whole stabilization is split with a distinction between stabilization in translation and stabilization in rotation along 2 or 3 axes. Hand shaking can be slight flicker or slight vibrations; the amplitude of this movement is often limited to an offset.

The evaluation unit can work as following. Using Figure 5 notations, the evaluation unit block 23 comprises the reference spatial position 231, the sensing sub unit 232 and the spatial position variation 233. In the evaluation unit 23, the spatial position variation 233 is determined upon the reference spatial position 231 and the current spatial position sensed by the sensors. A handheld device according to the present invention comprises a 3-axes gyroscope sensor, a 2-axes accelerometers, and stereoscopic sensors. The 3-axes gyroscope sensor providing the rotation information is used to measure angles and angles variations. As an orientation sensor, a gyroscope will measure angles evolution around the three axes and according to a reference mark. Practically, the evaluation unit 10 helped with the 3-axes gyroscope sensor senses and checks current position preferably at each image to be projected and saves new values of angles in case of change in a readable medium on the electronics that drives the pico-projector. Other implementations are possible. The 2-axes accelerometer, in measuring non-gravitational accelerations, will measure acceleration and potentially direction. It provides the translation information. Generally, accelerometers can be dedicated either to 2 axes (X and Y) or to 3 axes (X, Y, and Z). It is cost dependent.

To obtain linear movements of the camera, acceleration data are converted into displacement data. Some smartphones are equipped with 3-way axis device which is used to determine the handheld device physical position. The accelerometer can tell when the handheld device is tilted, rotated, or moved. In practice the spatial vector variation is determined by 3 independent coordinates in a coordinate system whereas the spatial orientation variation is determined by 3 independent angles. For spatial bad orientation we need to get an additional rotation angle of the pico-projector around its own central beam axis. Image stabilization will require another triplet corresponding to the 3 independent coordinates of a spatial point in a Cartesian coordinate system representative of the reference mark.

The movement to compensate for can be described in a 6-axis information vector (x, y, z, Rx, Ry, Rz). For each movement, a specific correction will be attributed. For a translation movement towards the X axis, the correction is a Shift on X axis. For a translation movement towards the Y axis, the correction is a shift on Y axis. For a translation movement towards the Z axis, the correction can be a Zoom In or a Zoom Out. For a rotation movement around X axis or Pitch, the keystone correction is to be made by a rotation along vertical axis. For a rotation movement around Y axis or Roll, the keystone correction is to be made by a rotation along horizontal axis. For an inner rotation movement, there is a rotation correction needed along Z axis or Yaw. For a combination of movements, one correction is a combination of associated corrections. For an image of the sequence of images to be projected, a spatial position variation is evaluated with respect to a reference spatial position.

The spatial position variation consists in a spatial orientation variation and a spatial vector variation. Accordingly, the 3 independent angles are preferably provided by a 3 axes gyroscope embedded in the handheld device. The Z-coordinate is provided by a stereoscopic sensor. The X and Y coordinates are provided by a 2-axes accelerometer. Conventional stereo vision is usually achieved with two cameras that are mounted in a known relationship to each other and are synchronized to take images at the same instant. Contrary to a one camera system, stereoscopic system brings the depth information. To measure depth a stereoscopic camera consists of two cameras that capture two different, horizontally shifted perspective viewpoints. This results in a disparity of objects in the recorded scene between the two cameras views depending on their depth. The depth and disparity are related in relationships using the focal length of the cameras and the inter-axial separation between the two lenses of the stereoscopic camera.

There are commonly two possible ways of taking stereoscopic pictures: by using special two-lens stereo cameras which is an optical system with two lens but only one camera or by using systems with two single-lens cameras (which are two separate cameras joined together). Stereoscopic pictures allow us to calculate the distance from the cameras to the chosen object within the picture. The distance is calculated from differences between the pictures and additional technical data like focal length and distance between the cameras.

Practically, the evaluation can be performed through an evaluation unit 10 adapted to evaluate a spatial position variation with respect to a reference spatial position of the handheld device; the spatial position variation being defined by a spatial orientation variation and a spatial vector variation.

The compensation can be performed in several possible implementations. For example one possible implementation is the one that always uses two consecutive frames from the input image sequence to estimate the spatial position variation, which is referred to as frame-to-frame algorithm. In that case, the reference spatial position will be variable between two images of the sequence of images to be projected. Another possible implementation is the one that keeps a reference image and uses it to estimate the variation between the reference and the current input image, which is referred to as the frame-to-reference algorithm. In that case, the reference spatial position will be constant for all images of the sequence of images to be projected. Any combination of those two implementations can of course be used, for example the refreshing of the reference spatial position every n images, with n a constant number. Anyway, in our case, a compensated image is generated from each image to be projected depending on the spatial position variation. At the end, what is projected onto the projection surface is the compensated image instead of the original image.

Any of inverse transformations methods well known can be used to generate a compensated image resulting from the input image to be projected and from sensors data about the spatial position variation. For example graphics processing unit implementations or digital image processing techniques. Generally speaking, for GPU implementations, the spatial transformation can develop a triangle mesh with one triangle defined by 3 vertices or points. The transformation is executed by texture mapping from the rectilinear mesh of the input image to the transformed shape of the destination image. In digital image processing implementation, the spatial transformation consists of spatially defined 2-dimensional image re-sampling or scaling filter. The scaling operation is performed with different scaling ratios in different parts of the image, according to the defined transformation.

Practically, the compensation can be performed through a compensation unit 11 adapted to generate a compensated image from an image of the sequence of images to be projected, according to the spatial position variation.

Using Figure 5 notations, in fact an input image 1A received from the projector image input 21 is transmitted to the compensation unit 24. In parallel the spatial position variation 233 is determined and transmitted to the compensation unit 24. The compensation unit 24 performs the inverse transformation to compensate for image instabilities due to the spatial position variation 233 and gets a compensated image 1B. The inverse transformation is based on the spatial position variation 233 and uses the spatial orientation angles and the spatial position vector coordinates in matrix products and additions. The expressions of the relationships for the inverse transformation include the case where spatial position variation 233 is null, which means that the handheld device 4 has not changed its position according to the reference spatial position. At the end of the compensation process, the compensation unit 24 transmits the compensated image 1B to the projector image output 22. The projector image output 22 projects at the projection surface 3 the compensated image 1B instead of the input image 1A received at the projector image input 21. The image displayed at the projection surface 3 is free of distortion and targets the display area of the projection surface 3.

An exemplary embodiment of the handheld device according to the present invention is as following. Figure 6 is a functional block of a handheld device according to an embodiment of the present invention. The handheld device 4 of Figure 6 comprises a projector 2, a stereoscopic sensor 7, a 2-axes accelerometer 8, a 3 axes gyroscope 9, an evaluation unit 10 and a compensation unit 11. Also represented on Figure 6 is the projection surface 3. The evaluation unit 10 is fed by the stereoscopic sensor 7 and the 2-axes accelerometer 8 and the 3 axes gyroscope 9. Furthermore the evaluation unit 10 outputs to the compensation unit 11. The compensation unit 11 generates a compensated image 1B for the projector 2 with an input image 1A and the input from the evaluation module 10. The projector 2 displays at the projection surface 3 the compensated image 1B received from the compensation unit 11.

The sensors according to the present invention can be connected to the handheld device on chip or they can be externally connected to it, serving as possible extensions of the handheld device. In either case the extension will be considered to be embedded to the handheld device. Presently, pico-projectors or stereoscopic sensors considered here are said to be embedded in the handheld device.

The intelligence of the system can be implemented in a computer readable medium. The handheld device may comprise a computer readable medium such that computers programs are loadable into data-processing units and capable of executing embodiments of the present invention.

The invention has been described with reference to preferred embodiments. However, many variations are possible within the scope of the invention.

## Claims

1. A method for the projection of a sequence of images onto a projection surface (3) by a handheld device (4) having an embedded projector (2), said method comprising, for an input image (1A) to be projected of said sequence of images:
a step of evaluation (23) wherein
a spatial position variation (233) is evaluated with respect to a reference spatial position (231) of said handheld device (4); and
said spatial position variation (233) is defined by a spatial orientation variation provided by a 3-axes gyroscope sensor and a spatial
vector variation; said spatial vector variation being determined by 3 independent coordinates; and
a step of compensation (24) wherein a compensated image (1B) is generated from said input image (1A) according to said spatial position variation (233); and
a step of projecting onto said projection surface (3) said compensated image (1B)
**characterized in that** in said step of evaluation (23), at least one of said 3 independent coordinates is provided by a stereoscopic sensor (7) by taking stereoscopic pictures, and 2 of said 3 independent coordinates are provided by a 2-axes accelerometer.

2. A method according to claim 1 wherein said reference spatial position (231) is constant for all images of said sequence of images.

3. A method according to claim 1 wherein said reference spatial position (231) is variable between two images of said sequence of images.

4. A method according to any of precedent claims wherein said spatial orientation variation is determined by 3 independent angles.

5. A method according to any of precedent claims wherein said stereoscopic sensor (7) comprises a two-lens stereo camera.

6. A method according to any of claims 1 to 4 wherein said stereoscopic sensor (7) comprises two single-lens cameras joined together.

7. A method according to any of precedent claims wherein said step of compensation (24) utilizes a graphics processing unit technique to generate said compensated image.

8. A handheld device (4) having an embedded projector (2) adapted to project a sequence of images onto a projection surface (3);
Said handheld device (4) comprising an evaluation unit (10) adapted to evaluate a spatial position variation (233) with respect to a reference spatial position (231) of said handheld device (4); said spatial position variation (233) being defined by a spatial orientation variation and a spatial vector variation; said spatial vector variation being determined by 3 independent coordinates; and
said handheld device (4) comprising a compensation unit (11) adapted to generate a compensated image (1B) from an input image (1A) to be projected of said sequence of images, depending on said spatial position variation (233); and
said handheld device (4) comprising a 3 axes gyroscope (9) adapted to provide said spatial orientation variation, and,
said handheld device (4) comprising a 2-axes accelerometer adapted to provide 2 of said 3 independent coordinates, and,
said embedded projector (2) being adapted to project onto said projection surface (3) said compensated image (1B)
**characterized in that** said handheld device (4) comprises a stereoscopic sensor (7) configured to take stereoscopic pictures and to provide at least one of the 3 independent coordinates determining said spatial vector variation (233).

9. A handheld device (4) according to claim 8 wherein said stereoscopic sensor (7) comprises a two-lens stereo camera.

10. A handheld device (4) according to claim 8 wherein said stereoscopic sensor (7) comprises two single-lens cameras joined together.

11. A handheld device (4) according to any of claims 8 to 10 wherein said spatial orientation variation is determined by 3 independent angles.

12. A handheld device (4) according to any of claims 8 to 11 configured to utilize a graphics processing unit technique to generate said compensated image (1B).

13. A computer program product comprising a computer readable medium, having thereon a computer program comprising program instructions, the computer program being loadable into a data-processing unit and adapted to cause execution of the method according to any of claims 1 to 7 when the computer program is run by the data-processing unit.

## Patentansprüche

1. Verfahren zur Projektion einer Folge von Bildern auf eine Projektionsfläche (3) durch eine tragbare Vorrichtung (4), die einen eingebetteten Projektor (2) aufweist, wobei das Verfahren für ein Eingangsbild (1A), das von der Folge von Bildern zu projizieren ist, Folgendes aufweist:
einen Bewertungsschritt (23), wobei
eine Veränderung (233) einer räumlichen Position in Bezug zu einer räumlichen Bezugsposition (231) der tragbaren Vorrichtung (4) bewertet wird; und
die Veränderung (233) der räumlichen Position durch eine Veränderung der räumlichen Ausrichtung, die durch einen 3-Achsen-Gyroskopsensor bereitgestellt wird, und eine Veränderung eines Raumvektors definiert wird; wobei die Veränderung des Raumvektors durch 3 unabhängige Koordinaten bestimmt wird; und
einen Kompensationsschritt (24), wobei ein kompensiertes Bild (1B) von dem Eingangsbild (1A) gemäß der Veränderung der räumlichen Position (233) erzeugt wird; und
einen Schritt zum Projizieren des kompensierten Bildes (1B) auf die Projektionsfläche (3)
**dadurch gekennzeichnet, dass** in dem Bewertungsschritt (23) mindestens eine der 3 unabhängigen Koordinaten durch einen stereoskopischen Sensor (7) durch Aufnehmen stereoskopischer Bilder bereitgestellt wird und 2 von den 3 unabhängigen Koordinaten durch einen 2-Achsen-Beschleunigungsmesser bereitgestellt werden.

2. Verfahren nach Anspruch 1, wobei die räumliche Bezugsposition (231) für alle Bilder der Folge von Bildern konstant ist.

3. Verfahren nach Anspruch 1, wobei die räumliche Bezugsposition (231) zwischen zwei Bildern der Folge von Bildern variabel ist.

4. Verfahren nach einem der vorhergehenden Ansprüche, wobei die Veränderung der räumlichen Ausrichtung durch 3 unabhängige Winkel bestimmt wird.

5. Verfahren nach einem der vorhergehenden Ansprüche, wobei der stereoskopische Sensor (7) eine Zweilinsen-Stereokamera aufweist.

6. Verfahren nach einem der Ansprüche 1 bis 4, wobei der stereoskopische Sensor (7) zwei miteinander verbundene Einzellinsenkameras aufweist.

7. Verfahren nach einem der vorhergehenden Ansprüche, wobei der Kompensationsschritt (24) eine Grafikprozessortechnik verwendet, um das kompensierte Bild zu erzeugen.

8. Tragbare Vorrichtung (4), die einen eingebetteten Projektor (2) aufweist, der angepasst ist, um eine Folge von Bildern auf eine Projektionsfläche (3) zu projizieren;
wobei die tragbare Vorrichtung (4) eine Bewertungseinheit (10) aufweist, die angepasst ist, um eine Veränderung (233) einer räumlichen Position in Bezug zu einer räumlichen Bezugsposition (231) der tragbaren Vorrichtung (4) zu bewerten; wobei die Veränderung (233) der räumlichen Position durch eine Veränderung einer räumlichen Ausrichtung und eine Veränderung eines Raumvektors definiert ist; wobei die Veränderung des Raumvektors durch 3 unabhängige Koordinaten bestimmt wird; und
die tragbare Vorrichtung (4) eine Kompensationseinheit (11) aufweist, die angepasst ist, um ein kompensiertes Bild (1B) von einem Eingangsbild (1A), das auf die Folge von Bildern zu projizieren ist, in Abhängigkeit von der Veränderung (233) der räumlichen Position zu erzeugen; und
die tragbare Vorrichtung (4) ein 3-Achsen-Gyroskop (9) aufweist, das angepasst ist, um die Veränderung der räumlichen Ausrichtung bereitzustellen, und
die tragbare Vorrichtung (4) einen 2-Achsen-Beschleunigungsmesser aufweist, der angepasst ist, um 2 von den 3 unabhängigen Koordinaten bereitzustellen, und
der eingebettete Projektor (2) angepasst ist, um das kompensierte Bild (1B) auf die Projektionsfläche (3) zu projizieren
**dadurch gekennzeichnet, dass** die tragbare Vorrichtung (4) einen stereoskopischen Sensor (7) aufweist, der ausgestaltet ist, um stereoskopische Bilder aufzunehmen und um mindestens eine von den 3 unabhängigen Koordinaten bereitzustellen, die die Veränderung (233) des Raumvektors bestimmen.

9. Tragbare Vorrichtung (4) nach Anspruch 8, wobei der stereoskopische Sensor (7) eine Zweilinsen-Stereokamera aufweist.

10. Tragbare Vorrichtung (4) nach Anspruch 8, wobei der stereoskopische Sensor (7) zwei miteinander verbundene Einzellinsenkameras aufweist.

11. Tragbare Vorrichtung (4) nach einem der Ansprüche 8 bis 10, wobei die Veränderung der räumlichen Ausrichtung durch 3 unabhängige Winkel bestimmt ist.

12. Tragbare Vorrichtung (4) nach einem der Ansprüche 8 bis 11, die ausgestaltet ist, um eine Grafikprozessortechnik zum Erzeugen des kompensierten Bildes (1B) zu verwenden.

13. Computerprogrammprodukt, das einen maschinenlesbaren Datenträger aufweist, der darauf ein Computerprogramm aufweist, das Programmbefehle aufweist, wobei das Computerprogramm in eine Datenverarbeitungseinheit geladen werden kann und angepasst ist, um die Ausführung des Verfahrens nach einem der Ansprüche 1 bis 7 zu bewirken, wenn das Computerprogramm durch die Datenverarbeitungseinheit ausgeführt wird.

## Revendications

1. Procédé de projection d'une séquence d'images sur une surface de projection (3) par un dispositif portatif (4) ayant un projecteur intégré (2), ledit procédé comprenant, pour une image d'entrée (1A) à projeter de ladite séquence d'images :
une étape d'évaluation (23) dans laquelle
une variation de position spatiale (233) est évaluée par rapport à une position spatiale de référence (231) dudit dispositif portatif (4) ; et
ladite variation de position spatiale (233) est définie par une variation d'orientation spatiale fournie par un capteur gyroscopique à 3 axes et une variation de vecteur spatial ; ladite variation de vecteur spatial étant déterminée par 3 cordonnées indépendantes ; et
une étape de compensation (24) dans laquelle une image compensée (1B) est générée à partir de ladite image d'entrée (1A) en fonction de ladite variation de position spatiale (233) ; et
une étape de projection sur ladite surface de projection (3) de ladite image compensée (1B),
**caractérisé en ce que**, dans ladite étape d'évaluation (23), au moins une desdites 3 coordonnées indépendantes est fournie par un capteur stéréoscopique (7) en prenant des images stéréoscopiques, et 2 desdites 3 coordonnées indépendantes sont fournies par un accéléromètre à 2 axes.

2. Procédé selon la revendication 1 dans lequel ladite position spatiale de référence (231) est constante pour toutes les images de ladite séquence d'images.

3. Procédé selon la revendication 1 dans lequel ladite position spatiale de référence (231) est variable entre deux images de ladite séquence d'images.

4. Procédé selon l'une quelconque des revendications précédentes dans lequel ladite variation d'orientation spatiale est déterminée par 3 angles indépendants.

5. Procédé selon l'une quelconque des revendications précédentes dans lequel ledit capteur stéréoscopique (7) comprend une caméra stéréo à deux lentilles.

6. Procédé selon l'une quelconque des revendications 1 à 4 dans lequel ledit capteur stéréoscopique (7) comprend deux caméras à une lentille reliées ensemble.

7. Procédé selon l'une quelconque des revendications précédentes dans lequel ladite étape de compensation (24) utilise une technique d'unité de traitement graphique pour générer ladite image compensée.

8. Dispositif portatif (4) ayant un projecteur intégré (2) adapté pour projeter une séquence d'images sur une surface de projection (3) ;
ledit dispositif portatif (4) comprenant une unité d'évaluation (10) adaptée pour évaluer une variation de position spatiale (233) par rapport à une position spatiale de référence (231) dudit dispositif portatif (4) ; ladite variation de position spatiale (233) étant définie par une variation d'orientation spatiale et une variation de vecteur spatial ; ladite variation de vecteur spatial étant déterminée par 3 cordonnées indépendantes ; et
ledit dispositif portatif (4) comprenant une unité de compensation (11) adaptée pour générer une image compensée (1B) à partir d'une image d'entrée (1A) à projeter de ladite séquence d'images, en fonction de ladite variation de position spatiale (233) ; et
ledit dispositif portatif (4) comprenant un gyroscope à 3 axes (9) adapté pour fournir ladite variation d'orientation spatiale, et
ledit dispositif portatif (4) comprenant un accéléromètre à 2 axes adapté pour fournir 2 desdites 3 coordonnées indépendantes, et
ledit projecteur intégré (2) étant adapté pour projeter sur ladite surface de projection (3) ladite image compensée (1B),
**caractérisé en ce que** ledit dispositif portatif (4) comprend un capteur stéréoscopique (7) configuré pour prendre des images stéréoscopiques et pour fournir au moins une des 3 coordonnées indépendantes déterminant ladite variation de vecteur spatial (233).

9. Dispositif portatif (4) selon la revendication 8 dans lequel ledit capteur stéréoscopique (7) comprend une caméra stéréo à deux lentilles.

10. Dispositif portatif (4) selon la revendication 8 dans lequel ledit capteur stéréoscopique (7) comprend deux caméras à une lentille reliées ensemble.

11. Dispositif portatif (4) selon l'une quelconque des revendications 8 à 10 dans lequel ladite variation d'orientation spatiale est déterminée par 3 angles indépendants.

12. Dispositif portatif (4) selon l'une quelconque des revendications 8 à 11 configuré pour utiliser une technique d'unité de traitement graphique afin de générer ladite image compensée (1B).

13. Produit-programme d'ordinateur comprenant un support lisible par ordinateur, ayant sur celui-ci un programme d'ordinateur comprenant des instructions de programme, le programme d'ordinateur étant chargeable dans une unité de traitement de données et adapté pour provoquer l'exécution du procédé selon l'une quelconque des revendications 1 à 7 quand le programme d'ordinateur est exécuté par l'unité de traitement de données.
